# EUROPEAN PATENT SPECIFICATION

(11) **EP 3 495 975 B1**
(45) Date of publication and mention of the grant of the patent: **29.01.2025**
(21) Application number: 18210545.2
(22) Date of filing: 05.12.2018
(51) Int. Cl.: H04L 9/40, H04W 12/065, G06V 40/16, G06F 21/32, G06F 21/35

(54) **FRONT DESK SYSTEM AUTO LOGOFF USING BIOMETRICS SOFTWARE AND BLUETOOTH COMMUNICATION**
AUTO-ABMELDUNG EINES REZEPTIONSSYSTEMS MIT BIOMETRIE-SOFTWARE UND BLUETOOTH-KOMMUNIKATION
DÉCONNEXION AUTOMATIQUE DE SYSTÈME DE GUICHET À L'AIDE D'UN LOGICIEL DE BIOMÉTRIE ET D'UNE COMMUNICATION BLUETOOTH

(30) Priority: 05.12.2017 IN 201711043646
(43) Date of publication of application: 12.06.2019
(73) Proprietor: Honeywell International Inc., Charlotte, NC 28202 (US)
(72) Inventor: MUKUNDALA, Sumanth Kumar, 500081 Hyderabad (IN); KUENZI, Adam, Salem, OR 97302-1142 (US)
(74) Representative: Dehns

(56) References cited:
- EP-A2- 2 701 096
- US-A1- 2003 025 603
- US-A1- 2015 035 643
- KOICHIRO NIINUMA ET AL: "Continuous user authentication using temporal information", PROCEEDINGS OF SPIE, vol. 7667, 5 April 2010 (2010-04-05), XP055180574, ISSN: 0277-786X, DOI: 10.1117/12.847886
- ANONYMOUS: "Screensaver - Wikipedia", 22 May 2010 (2010-05-22), XP055459420, Retrieved from the Internet <URL:https://en.wikipedia.org/w/index.php?title=Screensaver&oldid=363576565> [retrieved on 20180314]

## Description

### BACKGROUND

Conventional front desk systems logoff when there is no action or no performance in an application based on a logoff timer. For instance, if a front desk clerk logs onto a conventional front desk system and subsequently stops using the conventional front desk system, the logoff timer will count (e.g., for 10 minutes). Providing that there is no action or no performance in application (e.g. from a mouse movement or keystrokes on a keyboard) between the start and end of the count, the logoff timer will automatically log off at the count's conclusion. A problem exists when the front desk clerk steps away from the conventional front desk system. Since the log off is timer based and is usually long enough for the convenience of the front desk clerk, the conventional front desk system is exposed to someone who can come and encode a card and go without receptionist notice.

EP 2701096 A2 discloses an acquiring unit which acquires a captured image of a user, an extracting unit which extracts first feature data and second feature data of the user from the image, and an authentication unit which authenticates the user based on the first and second feature data.

US 2003/025603 A1 discloses an authenticator worn by a user which is capable of communicating with remotely located electronic devices.

US 2015/035643 A1 discloses a biometrics identification module which communicates with user sensing devices to authenticate user transactions.

### BRIEF DESCRIPTION

Viewed from a first aspect, the invention provides a computer-implemented method comprising: executing an initial login operation of the user in response to receiving user credentials; capturing, by a detection device coupled to a computer, characteristics of a target at the time of the initial login operation, wherein the characteristics of the target comprises a unique wireless signal; associating the characteristics of the target with the user credentials only during this login session; wherein the detection by the detection device of the characteristics of the target causes a resetting of an inactivity timer; automatically executing, by the computer, a temporary logoff operation of a user at a conclusion of the inactivity timer; initiating, by the computer, an operation of a logoff timer in response to the execution of the temporary logoff operation; automatically executing, by the computer, a login operation of the user when the characteristics are redetected by the detection device during the operation of the logoff timer, wherein the computer executes a full logout operation of the user at a conclusion of the logoff timer, and wherein the detection device comprises a transceiver, the target comprises a wireless beacon on the user, and wherein the unique wireless signal is outputted by the wireless beacon and detectable by the transceiver.

Viewed from a second aspect, the invention provides a detection system comprising a computer and a detection device, the computer comprising a memory and a processor, the memory storing program instructions thereon, the program instructions executable by the processor to cause: executing an initial login operation of the user in response to receiving user credentials; capturing, by the detection device coupled to the computer, characteristics of a target at the time of the initial login operation, wherein the characteristics of the target comprises a unique wireless signal; associating the characteristics of the target with the user credentials only during this login session; wherein the detection by the detection device of the characteristics of the target causes a resetting of an inactivity timer; automatically executing, by the computer, a temporary logoff operation of a user at a conclusion of the inactivity timer; initiating, by the computer, an operation of a logoff timer in response to the execution of the temporary logoff operation; automatically executing, by the computer, a login operation of the user when the characteristics are redetected by the detection device during the operation of the logoff timer, wherein the computer executes a full logout operation of the user at a conclusion of the logoff timer, and wherein the detection device comprises a transceiver, the target comprises a wireless beacon on the user, and wherein the unique wireless signal is outputted by the wireless beacon and detectable by the transceiver.

Viewed from a third aspect of the invention, a computer program product is provided. The computer program product includes a computer readable storage medium having program instructions embodied therewith. The program instructions are executable by a computer coupled to a detection device and configure the computer to carry out the method of the first aspect.

### BRIEF DESCRIPTION OF THE DRAWINGS

The following descriptions should not be considered limiting in any way. With reference to the accompanying drawings, like elements are numbered alike:
FIG. 1 depicts a detection system according to one or more embodiments;
FIG. 2 depicts a process flow of a detection system according to one or more embodiments;
FIG. 3 depicts a detection system; and
FIG. 4 depicts a detection system according to one or more embodiments.

### DETAILED DESCRIPTION

A detailed description of one or more embodiments of the disclosed apparatus and method are presented herein by way of exemplification and not limitation with reference to the Figures.

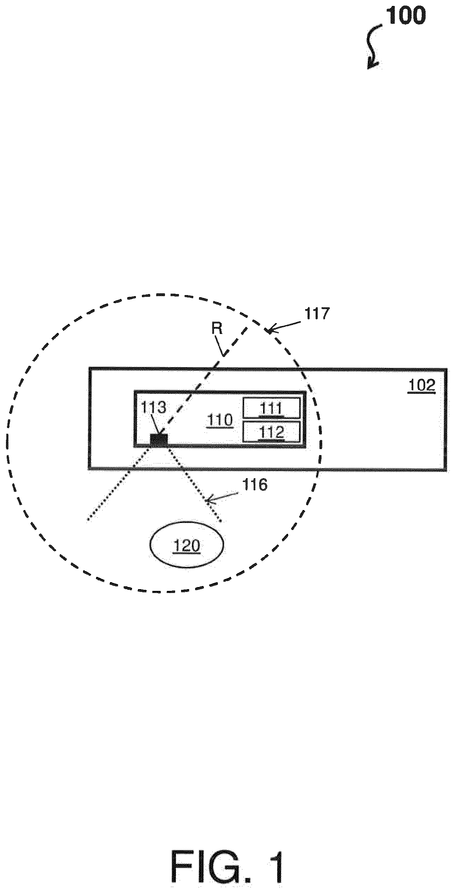

In accordance with one or more embodiments, a system comprises one or more detection devices that detect a target with respect to whether a user remains logged-in. The system can be implemented as a method, computer program product, and/or a device, and is further described herein with respect to, but not limited thereto, a reception desk example. The system will now be described with respect to FIGS. 1-2.

FIG. 1 depicts a detection system 100. The detection system 100 can be implemented at a reception desk 102 and it comprises a computer 110 and a detection device 113. The computer 110 comprises a processor 111 and a memory 112. The detection device 113 can be built-in to the computer 110 or it can be a peripheral of the computer and connected via wireless or wired means to the computer (e.g. through a USB connection or Wi-Fi, Bluetooth, or the like). The memory 112 of the detection system 100 stores program instructions that are executable by the processor 111 to cause the operation described herein. The detection device 113 can maintain one or more detection zones (e.g., a first detection zone 116 and a second detection zone 117) within which characteristics of a target 120 are captured and detected. In accordance with one or more embodiments, the target 120 can be a device on the user (e.g., a Bluetooth beacon or mobile phone), and the like.

In general, the detection system 100 operates to immediately logoff of the computer 110 a user when that user is away from the detection system 100, while still providing a user friendly mechanism for the user to log back on to the computer 110. For example, upon the user logging-in, the detection device 113 captures characteristics of the target 120 associated with the user (not shown) that is logging-in and provides these characteristics to the software on the computer 110. The computer 110 then loops an inactivity timer with respect to whether the characteristics are subsequently detected by the detection device 110. At a conclusion of the inactivity timer, the computer 110 automatically executes a temporary logoff operation of the user if the characteristics have not been detected. Then, the computer 110 initiates a logoff timer in response to the execution of the temporary logoff operation and only automatically executes a login operation of the user when the characteristics are redetected by the detection device 113 during the operation of the logoff timer. In accordance with one or more embodiments, the inactivity timer may be configured to execute a temporary logoff operation much sooner than a conventional inactivity timer that was based on mouse movement or keyboard use by a user. This leads to the technical effect and benefit of higher security. The temporary logoff timer allows for the convenience of the user returning to the computer 110 and may be a similar length to a conventional inactivity timer so that the overall convenience of the user is about the same with respect to how often the user needs to re-login and submit their respective user credentials. Further, the temporary logoff increases security because someone cannot use the computer 110 unless they are the same user or they execute a full new login as a different user.

The detection system 100 is an example and is not intended to suggest any limitation as to the scope of use or operability of embodiments described herein (indeed additional or alternative components and/or implementations may be used). Further, while single items are illustrated for items of the detection system 100, these representations are not intended to be limiting and thus, any item may represent a plurality of items.

The computer 110 can include any processing hardware, software, or combination of hardware and software utilized by the detection system 100 to carry out computer readable program instructions by performing arithmetical, logical, and/or input/output operations. The computer 110 operates to provide front desk and reception services to customer, along with transmit and receive communications to and from the detection device 113. The computer 110 operates two or more timers (e.g., an inactivity timer and a logoff timer) with respect to the operations described herein. The processor 111 can comprise one or more central processing units (CPU(s)), also referred to as processing circuits, coupled via a system bus to the memory 112 and various other components (e.g., the detection device 113). The memory 112 can include a read only memory (ROM) and a random access memory (RAM). In accordance with one or more embodiments, the computer 110 can record in a log of the memory 112 when a user logs in or out with respect to the first login, the temporary logouts based on the inactivity timer, the automatic logins based on the detection of the target 120, etc. In this regard, when a valid user successfully logs into or out of the detection system 100, the log can generate a line indicating a user name date and time stamp.

The detection device 113 can be an electro-mechanical component that detects events in an environment and generates an electrical signal as a function of the events (e.g., generates an electrical signal in response to detecting characteristics of the target 120). The detection device 113 can utilize software and/or firmware to carry out operations particular thereto. The software and/or firmware utilized by the detection device 113 can be provided with respect to continuously sensing characteristics of the target 120. The detection device includes a transceiver (e.g., communications and/or interface adapter), the target includes a wireless beacon on the user (e.g., an electronic bracelet), and the characteristics include a unique wireless signal outputted by the wireless beacon and detectable by the transceiver.

The first detection zone 116 and the second detection zone 117 are operation areas to and from which the target 120 can move. In the case of when the detection device 113 is a transceiver, the second detection zone 117 can be a detection area defined by a radius R. Note that either detection zone 116 and 117 can comprise or overlap with a wide area network designed for communications with the target 120 (e.g., any wireless communication architecture, such as Bluetooth, Wi-Fi, ZigBee, etc.) or computer 110.

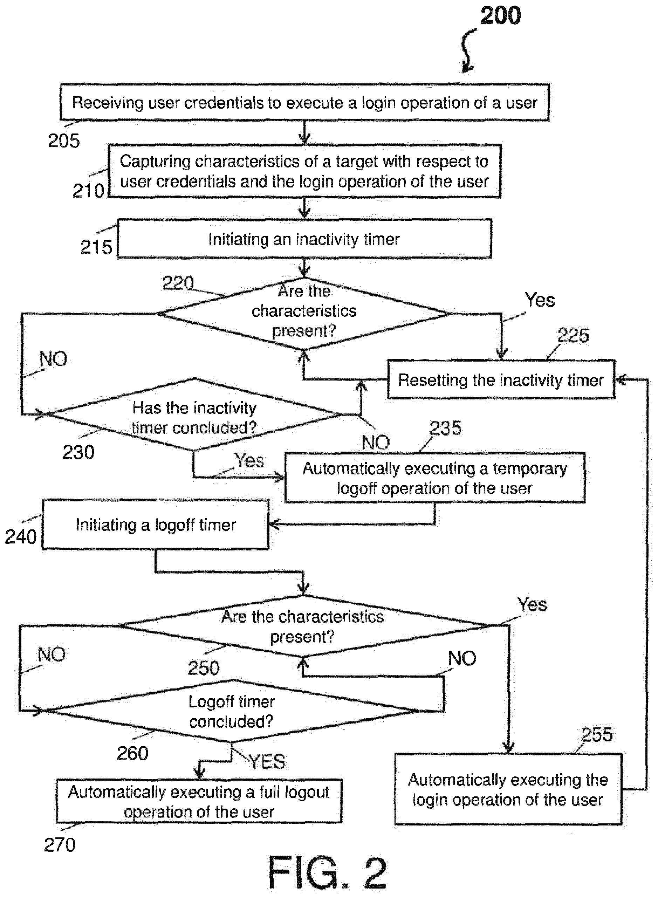

FIG. 2 depicts a process flow 200 of the detection system 100 according to one or more embodiments. The process flow begins at block 205, where the detection system 100 receives user credentials to execute a login operation of a user. The user credentials can include a username and a password unique to the user logging-in, or be of any other form for identifying and verifying a user with a computer software program. The login operation can include an operation by the computer 110 that provides a unique interface tailored to the user providing the user credentials.

At block 210, the detection system 100 captures characteristics of a target 120 with respect to the user credentials and the login operation of the user. The characteristics can correspond to distinguishing features of a radio signal, etc. At block 215, the detection system 100 initiates an inactivity timer. The inactivity timer is a mechanism that tracks an amount of time in which no activity has taken place with respect to the computer 110. The inactivity timer counts, either up or down, to a predefined variable. The predefined variable is a time limit that can be set by an administrator, such as 10 seconds, 30 seconds, 60 seconds, 2 minutes, 5 minutes, 10 minutes, and the like (e.g., any time greater than zero).

At decision block 220, the detection device 113 determines whether any characteristics are present (e.g., within one or more detection zones). If the detection device 113 determines that the characteristics of the target 120 are present, then the process flow 200 proceeds to block 225 (e.g., as indicated by the YES arrow). At block 225, the detection system 100 resets the inactivity time. In this regard, it is clear that the user is still local to the computer 110 and, thus, the threat to an unauthorized person using the computer 110 is low. After block 225, the process flow 200 returns to decision block 220. If the detection device 113 determines that the characteristics of the target 120 are not present, then the process flow 200 proceeds to decision block 230 (e.g., as indicated by the NO arrow).

At decision block 230, the detection system 100 determines whether the inactivity timer has concluded. If the detection system 100 determines that the inactivity timer has not concluded, then the process flow 200 proceeds back to decision block 220 (e.g., as indicated by the NO arrow). In this regard, the user has not been absent from the computer 110 for a sufficient amount of time to warrant a logoff. If the detection system 100 determines that the inactivity timer has concluded, then the process flow 200 proceeds to block 235 (e.g., as indicated by the YES arrow).

At block 235, the detection system 100 automatically executes a temporary logoff operation of the user. In this regard, it is clear that the user is still away from the computer 110 and has been for a significant amount of time. Thus, the threat to an unauthorized person using the computer 110 is high. At block 240, the detection system 100 initiates a logoff timer.

At decision block 250, the detection device 113 determines whether any characteristics are present (e.g., within one or more detection zones). If the detection device 113 determines that the characteristics of the target 120 are present, then the process flow 200 proceeds to block 255 (e.g., as indicated by the YES arrow). At block 255, the detection system 100 automatically executes the login operation of the user. In this regard, it is clear that the user has return to the computer 110 and rather than require the manual entry of the previous user credentials, the computer 110 can automatically logon the user based on the characteristics of the target 120 being present. After block 255, the process flow 200 returns to block 225. If the detection device 113 determines that the characteristics of the target 120 are not present, then the process flow 200 proceeds to decision block 260 (e.g., as indicated by the NO arrow).

At decision block 260, the detection system 100 determines whether the logoff timer has concluded. If the detection system 100 determines that the logoff timer not has concluded, then the process flow 200 proceeds back to decision block 250 (e.g., as indicated by the NO arrow). If the detection system 100 determines that the logoff timer has concluded, then the process flow 200 proceeds to block 270 (e.g., as indicated by the YES arrow). At block 270, the detection system 100 automatically executes a full logout operation of the user. At this stage, the computer 110 will require the manual entry of any user credentials for access to the computer 110 to be granted.

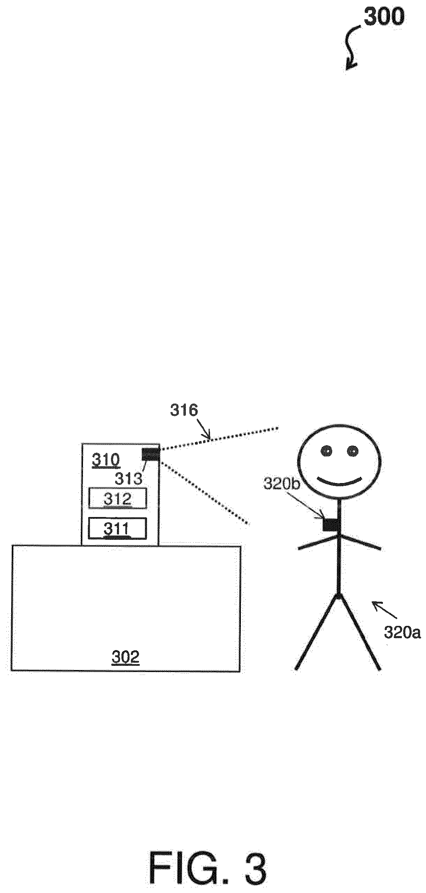

Turning now to FIG. 3-4, the above detection system will now be further described. FIG. 3 depicts a detection system 300 using biometrics. The detection system 300 can be implemented at a reception desk 302 and it comprises a computer 310 and a detection device 313 (e.g., camera). The computer 310 comprises a processor 311 and a memory 312. The memory 312 of the detection system 300 stores program instructions that are executable by the processor 311 to cause the operation described herein. The detection device 313 can maintain a detection zone 316 (e.g., a field of view) within which one or more targets 320a and 320b can be captured and detected (where target 320a is a user and target 320b is a name tag).

In general, the detection system 300 can operate facial recognition, e.g., biometrics software as a service. In this regard, a user can login into the computer 310 using their user credentials and, after successfully logging-in to the computer 310, an internal facial recognition software of the computer 310 initiates and tracks the user's face or the name tag characters (e.g., using the detection device 313). Thus, when the user goes away from the computer 310, the computer 310 automatically logs-off and will only automatically log-on (without a manual login) if the same user returns to the computer 310 and is identified by the facial recognition software. In this example, the user is not initially identified by the facial recognition software, but rather they are identified with their normal user account identification and then authenticated by their account password. Further, the facial characteristics that are captured as part of process flow 200 at block 210 may only be temporarily associated with the current user that is logged into the computer 110. After the logoff timer expires (block 270) the characteristics captured in block 210 may be forgotten by the computer 110. Thus, the facial recognition ensures that the same person that logged in is continuing to use the software. If the person changes from a first user to a second user, the facial recognition software determines the change and the computer 310 will automatically log-off. If the user logs in a first time, but then leaves the detection zone 316 then the computer 310 will automatically log-off. Later, if the user returns at some later time and logs-in a second time, but they are wearing different clothing, or they have altered their face (e.g. by shaving) the detection device 313 will possibly identify different characteristics of the user that may on the second login from the first login. One example of a different characteristic is the color tone of their clothing.

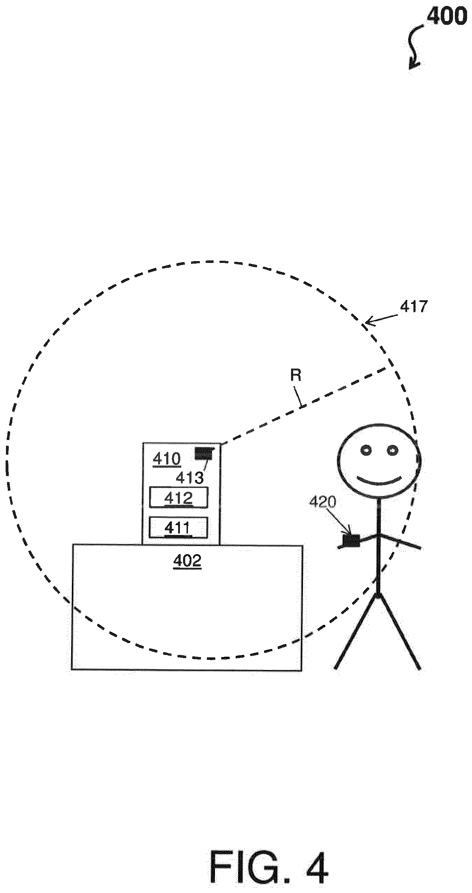

FIG. 4 depicts a detection system 400 using Bluetooth communication according to one or more embodiments. The detection system 400 can be implemented at a reception desk 402 and it comprises a computer 410 and a detection device 413 (e.g., transceiver). The computer 410 comprises a processor 411 and a memory 412. The memory 412 of the detection system 400 stores program instructions that are executable by the processor 411 to cause the operation described herein. The detection device 410 can maintain a detection zone 417 with a radius R (e.g., a detection area) within which one or more targets 420 can be captured and detected (where target 420 is a bracelet or Bluetooth wearable badge).

In general, each user interacting with the detection system 400 can have a corresponding Bluetooth wearable badge 420 that can be applied or fixed to a shirt during working hours. A user can login into the computer 410 using their user credentials and, after successfully logging-in to the computer 410, the corresponding Bluetooth wearable badge 420 will advertise and communicate the computer 410. Thus, when the user goes away from the computer 410, the computer 410 automatically logs-off and will only automatically log-on (without a manual login) if the same user having the same badge 420 returns to the computer 410 and is identified by the corresponding Bluetooth wearable badge 420.

In view of the above, the technical effects and benefits of the system described herein include a fully secured system only accessed by authorized staff via face detection or Bluetooth communication, such that a receptionist need not worry if they temporarily forgot to lock a computer or logoff when they step away (indeed the system will automatically logoff).

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A computer-implemented method comprising:
executing an initial login operation of the user in response to receiving user credentials;
capturing (210), by a detection device (413) coupled to a computer (410), characteristics of a target (420) at the time of the initial login operation, wherein the characteristics of the target comprises a unique wireless signal; and
associating the characteristics of the target with the user credentials only during this login session;
wherein the detection by the detection device of the characteristics of the target causes a resetting of an inactivity timer;
automatically executing (235), by the computer, a temporary logoff operation of a user at a conclusion of the inactivity timer;
initiating (240), by the computer, an operation of a logoff timer in response to the execution of the temporary logoff operation; and
automatically executing (255), by the computer, a login operation of the user when the characteristics are redetected by the detection device during the operation of the logoff timer, wherein the computer executes a full logout operation of the user at a conclusion of the logoff timer,
wherein the detection device comprises a transceiver, the target comprises a wireless beacon (420) on the user, and wherein the unique wireless signal is outputted by the wireless beacon and detectable by the transceiver.

2. A detection system (400) comprising a computer (410) and a detection device (413), the computer comprising a memory (412) and a processor (411), the memory storing program instructions thereon, the program instructions executable by the processor to cause:
executing an initial login operation of the user in response to receiving user credentials;
capturing, by the detection device coupled to the computer, characteristics of a target (420) at the time of the initial login operation, wherein the characteristics of the target comprises a unique wireless signal; and
associating the characteristics of the target with the user credentials only during this login session;
wherein the detection by the detection device of the characteristics of the target causes a resetting of an inactivity timer;
automatically executing, by the computer, a temporary logoff operation of a user at a conclusion of the inactivity timer;
initiating, by the computer, an operation of a logoff timer in response to the execution of the temporary logoff operation; and
automatically executing, by the computer, a login operation of the user when the characteristics are redetected by the detection device during the operation of the logoff timer, wherein the computer executes a full logout operation of the user at a conclusion of the logoff timer,
wherein the detection device comprises a transceiver, the target comprises a wireless beacon (420) on the user, and wherein the unique wireless signal is outputted by the wireless beacon and detectable by the transceiver.

3. A computer program product comprising a computer readable storage medium having program instructions embodied therewith, wherein the program instructions are executable by an apparatus comprising a computer coupled to a detection device, configuring the apparatus to carry out the method of claim 1 .

## Patentansprüche

1. Computerimplementiertes Verfahren, umfassend:
Ausführen eines anfänglichen Anmeldevorgangs des Benutzers als Reaktion auf Erhalten von Benutzeranmeldeinformationen;
Erfassen (210) durch eine mit einem Computer (410) gekoppelte Detektionsvorrichtung (413) von Merkmalen eines Ziels (420) zum Zeitpunkt des anfänglichen Anmeldevorgangs, wobei die Merkmale des Ziels ein eindeutiges drahtloses Signal umfassen; und
Verknüpfen der Merkmale des Ziels mit den Benutzeranmeldeinformationen nur während dieser Anmeldesitzung;
wobei die Detektion durch die Detektionsvorrichtung der Eigenschaften des Ziels ein Zurücksetzen eines Inaktivitätszeitgebers bewirkt;
automatisches Ausführen (235) durch den Computer eines temporären Abmeldevorgangs eines Benutzers nach Ablauf des Inaktivitätszeitgebers;
Einleiten (240) durch den Computer eines Vorgangs eines Abmeldezeitgebers als Reaktion auf die Ausführung des temporären Abmeldevorgangs; und
automatisches Ausführen (255) durch den Computer eines Anmeldevorgangs des Benutzers, wenn die Merkmale während des Betriebs des Abmeldezeitgebers erneut von der Detektionsvorrichtung detektiert werden, wobei der Computer nach Ablauf des Abmeldezeitgebers einen vollständigen Abmeldevorgang des Benutzers ausführt,
wobei die Detektionsvorrichtung einen Sendeempfänger umfasst, das Ziel einen drahtlosen Signalgeber (420) am Benutzer umfasst, und wobei das eindeutige drahtlose Signal vom drahtlosen Signalgeber ausgegeben wird und vom Sendeempfänger detektierbar ist.

2. Detektionssystem (400), das einen Computer (410) und eine Detektionsvorrichtung (413) umfasst, wobei der Computer einen Speicher (412) und einen Prozessor (411) umfasst, wobei der Speicher Programmanweisungen darauf speichert, wobei die Programmanweisungen durch den Prozessor ausführbar sind, um zu bewirken:
Ausführen eines anfänglichen Anmeldevorgangs des Benutzers als Reaktion auf Erhalten von Benutzeranmeldeinformationen;
Erfassen durch die mit dem Computer gekoppelte Detektionsvorrichtung von Merkmalen eines Ziels (420) zum Zeitpunkt des anfänglichen Anmeldevorgangs, wobei die Merkmale des Ziels ein eindeutiges drahtloses Signal umfassen; und
Verknüpfen der Merkmale des Ziels mit den Benutzeranmeldeinformationen nur während dieser Anmeldesitzung;
wobei die Detektion durch die Detektionsvorrichtung der Eigenschaften des Ziels ein Zurücksetzen eines Inaktivitätszeitgebers bewirkt;
automatisches Ausführen durch den Computer eines temporären Abmeldevorgangs eines Benutzers nach Ablauf des Inaktivitätszeitgebers;
Einleiten durch den Computer eines Vorgangs eines Abmeldezeitgebers als Reaktion auf die Ausführung des temporären Abmeldevorgangs; und
automatisches Ausführen durch den Computer eines Anmeldevorgangs des Benutzers, wenn die Merkmale während des Betriebs des Abmeldezeitgebers erneut von der Detektionsvorrichtung detektiert werden, wobei der Computer nach Ablauf des Abmeldezeitgebers einen vollständigen Abmeldevorgang des Benutzers ausführt,
wobei die Detektionsvorrichtung einen Sendeempfänger umfasst, das Ziel einen drahtlosen Signalgeber (420) am Benutzer umfasst, und wobei das eindeutige drahtlose Signal vom drahtlosen Signalgeber ausgegeben wird und vom Sendeempfänger detektierbar ist.

3. Computerprogrammprodukt, das ein computerlesbares Speichermedium umfasst, das damit verkörperte Programmanweisungen aufweist, wobei die Programmanweisungen durch eine Einrichtung ausführbar sind, die einen mit einer Detektionsvorrichtung gekoppelten Computer umfasst, die die Einrichtung konfigurieren, um das Verfahren nach Anspruch 1 auszuführen.

## Revendications

1. Procédé mis en oeuvre par ordinateur, comprenant :
l'exécution d'une opération de connexion initiale de l'utilisateur à la suite de la réception de justificatifs d'identité d'utilisateur ;
la capture (210), par un dispositif de détection (413) couplé à un ordinateur (410), de caractéristiques d'une cible (420) au moment de l'opération de connexion initiale, dans lequel les caractéristiques de la cible comprennent un signal sans fil unique ; et
l'association des caractéristiques de la cible aux justificatifs d'identité d'utilisateur uniquement pendant cette session de connexion ;
dans lequel la détection par le dispositif de détection des caractéristiques de la cible provoque une réinitialisation d'un temporisateur d'inactivité ;
l'exécution automatique (235), par l'ordinateur, d'une opération de déconnexion temporaire d'un utilisateur à la fin du temporisateur d'inactivité ;
l'initiation (240), par l'ordinateur, d'une opération d'un temporisateur de déconnexion à la suite de l'exécution de l'opération de déconnexion temporaire ; et
l'exécution automatique (255), par l'ordinateur, d'une opération de connexion de l'utilisateur lorsque les caractéristiques sont redétectées par le dispositif de détection pendant l'opération du temporisateur de déconnexion, dans lequel l'ordinateur exécute une opération de déconnexion complète de l'utilisateur à la fin du temporisateur de déconnexion,
dans lequel le dispositif de détection comprend un émetteur-récepteur, la cible comprend une balise sans fil (420) sur l'utilisateur et dans lequel le signal sans fil unique est émis par la balise sans fil et peut être détecté par l'émetteur-récepteur.

2. Système de détection (400) comprenant un ordinateur (410) et un dispositif de détection (413), l'ordinateur comprenant une mémoire (412) et un processeur (411), la mémoire stockant des instructions de programme sur celle-ci, les instructions de programme pouvant être exécutées par le processeur pour provoquer :
l'exécution d'une opération de connexion initiale de l'utilisateur à la suite de la réception de justificatifs d'identité d'utilisateur ;
la capture, par le dispositif de détection couplé à l'ordinateur, de caractéristiques d'une cible (420) au moment de l'opération de connexion initiale, dans lequel les caractéristiques de la cible comprennent un signal sans fil unique ; et
l'association des caractéristiques de la cible aux justificatifs d'identité d'utilisateur uniquement pendant cette session de connexion ;
dans lequel la détection par le dispositif de détection des caractéristiques de la cible provoque une réinitialisation d'un temporisateur d'inactivité ;
l'exécution automatique, par l'ordinateur, d'une opération de déconnexion temporaire d'un utilisateur à la fin du temporisateur d'inactivité ;
l'initiation, par l'ordinateur, d'une opération d'un temporisateur de déconnexion à la suite de l'exécution de l'opération de déconnexion temporaire ; et
l'exécution automatique, par l'ordinateur, d'une opération de connexion de l'utilisateur lorsque les caractéristiques sont redétectées par le dispositif de détection pendant l'opération du temporisateur de déconnexion, dans lequel l'ordinateur exécute une opération de déconnexion complète de l'utilisateur à la fin du temporisateur de déconnexion,
dans lequel le dispositif de détection comprend un émetteur-récepteur, la cible comprend une balise sans fil (420) sur l'utilisateur et dans lequel le signal sans fil unique est émis par la balise sans fil et peut être détecté par l'émetteur-récepteur.

3. Produit de programme informatique comprenant un support de stockage lisible par ordinateur présentant des instructions de programme incorporées à celui-ci, dans lequel les instructions de programme peuvent être exécutées par un appareil comprenant un ordinateur couplé à un dispositif de détection, en configurant l'appareil pour réaliser le procédé selon la revendication 1.
